# EUROPEAN PATENT APPLICATION

(11) **EP 4 516 835 A1**
(43) Date of publication of application: **05.03.2025**
(21) Application number: 23810907.8
(22) Date of filing: 17.05.2023
(51) Int. Cl.: C08G 63/20, C08G 63/78, C08G 63/91, D01F 6/84

(54) **SEMI-AROMATIC POLYESTER, PREPARATION METHOD THEREFOR, AND APPLICATION THEREOF**

(30) Priority: 24.05.2022 CN 202210569229
(71) Applicant: Zhuhai Kingfa Biomaterial Co., Ltd., Zhuhai, Guangdong 519050 (CN); KINGFA SCI. & TECH. CO., LTD., Guangzhou, Guangdong 510663 (CN)
(72) Inventor: ZHANG, Chuanhui, Zhuhai, Guangdong 519050 (CN); CHEN, Pingxu, Zhuhai, Guangdong 519050 (CN); YE, Nanbiao, Zhuhai, Guangdong 519050 (CN); OUYANG, Chunping, Zhuhai, Guangdong 519050 (CN); MAI, Kaijin, Zhuhai, Guangdong 519050 (CN); DONG, Xueteng, Zhuhai, Guangdong 519050 (CN); ZENG, Xiangbin, Zhuhai, Guangdong 519050 (CN); LU, Changli, Zhuhai, Guangdong 519050 (CN)
(74) Representative: Petraz, Gilberto Luigi
(86) International application number: PCT/CN2023/094638
(87) International publication number: WO 2023/226834

(57) **Abstract**

Disclosed in the present invention is a semi-aromatic polyester, a preparation method therefor and use thereof; a total amount of low molecular substances in the semi-aromatic polyester is 0.6 - 1.5 wt%, so that the separation problem from the semi-aromatic polyester as well as its fluidity can be improved, and the semi-aromatic polyester prepared has high glossiness and good fluidity also.

## Description

### TECHNICAL FIELD

The present invention relates to the field of biodegradable polyester, and specifically relates to a semi-aromatic polyester having high glossiness and good fluidity, a preparation method therefor and use thereof.

### BACKGROUND

Currently, the thermoplastic aromatic polyesters widely used in industries and daily life have good thermo stability and mechanical property, which are easy to processing with low cost. For example, polyethylene terephthalate (PET) and polybutylene terephthalate (PBT) have been widely used in manufacture of fibers, membranes and containers. However, it is difficult to degrade these aromatic polyesters after use, and it has not been observed that the aromatic polyesters such as PET and PBT are subjected to obvious and direct degradation by microorganism till now. In order to integrate the good properties of aromatic polyesters, the skilled in the art have been dedicated to the study of synthesizing semi-aromatic polyesters since 1980s, that is, introducing an aromatic segment into the aliphatic polyester to obtain a semi-aromatic polyester.

However, problems such as separation of small molecules out of the surface and loss of gloss are usually found in the semi-aromatic polyester products. These problems are generally caused by too high content of small molecular substances in the resin, and further separation of the small molecular substances out of the surface during storage. These small molecules in the resin also have adverse effect on the process of injection molding or blow molding without doubt, which easily lead to issues like mold contamination and air trapping, and thus various defects in the product.

On the other hand, compared to the aromatic polyester, it is more difficult to directly apply the semi-aromatic polyester to injection molding due to the properties per se, i.e. lower melt index and greater intrinsic viscosity. Particularly, lack of injection and mold sticking are more likely to take place in a thin-wall semi-aromatic polyester product with large area, resulting in low qualified rate of production and efficiency.

### SUMMARY

In order to overcome the deficiencies in the prior art, an objective of the present invention is to provide a semi-aromatic polyester with a specific amount of low molecular substances. Not only the problem of separation of low molecular substances out of the surface in the semi-aromatic polyester product is solved, but also the polyester product has high glossiness with improved fluidity, so that the product glossiness and the fluidity are balanced.

Another objective of the present invention is to provide a preparation method for the semi-aromatic polyester.

The above-mentioned objectives are achieved by the following technical solutions:
A semi-aromatic polyester, includes repeating units derived from the following components:
a first component A, based on a total molar amount of the first component A, includes:
a1) from 40 to 60 mol% of at least one aliphatic dicarboxylic acid or derivatives thereof;
a2) from 40 to 60 mol% of at least one aromatic dicarboxylic acid or derivatives thereof;
a second component B, being 1,4-butanediol;
wherein based on a total weight of the semi-aromatic polyester, a total amount of low molecular substances in the semi-aromatic polyester is from 0.6 to 1.5 wt%, preferably from 0.7 to 1.2 wt%.

The total amount of low molecular substances is determined according to the following method:
Adding 10 g the semi-aromatic polyester granules of which a mass is denoted as w g, to 100 mL ethanol for heating reflux for 4 h; subjecting the semi-aromatic polyester granules and the ethanol to filtration when they are still hot to obtain a filtrate, then pouring the filtrate to a pre-weighed evaporating dish of which a weight is denoted as a₀, evaporating the filtrate in water bath to be approximately dry, placing the evaporating dish to a 105°C drying oven for drying for 2 h, then taking out the evaporating dish and cooling for 0.5 h, weighing the evaporating dish and denoting as a₁. The total amount of low molecular substances = (a₁ - a₀)/w× 100%.

The low molecular substances in the semi-aromatic polyester are cyclic esterification products. It is unexpectedly found in the present invention that the problem of separation of low molecular substances out of the semi-aromatic polyester is solved and fluidity of the semi-aromatic polyester is simultaneously improved, if controlling a total amount of low molecular substances in the semi-aromatic polyester to range from 0.6 to 1.5 wt%. If the total amount of low molecular substances in the semi-aromatic polyester is too high, severe separation will rise during the subsequent processing and use with poor glossiness; and if the total amount of low molecular substances is too low, such low molecular substances are unable to function as a flow modifier, thereby affecting the improvement of fluidity of the semi-aromatic polyester. Preferably, the total amount of low molecular substances in the semi-aromatic polyester is from 0.7 to 1.2 wt%.

In the present invention, the component a1) is selected from one or a mixture of more of oxalic acid, malonic acid, succinic acid, glutaric acid, adipic acid, pimelic acid, suberic acid, azelaic acid, sebacic acid, 1,11-undecanedioic acid, 1,10-decanedioic acid, undecanedioic acid, 1,12-dodecanedioic acid, hexadecanedioic acid, eicosanedioic acid, or tetracosandioic acid, or their ester derivatives or their anhydride derivatives.

As a specifically selective example, the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl) glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyl adipic acid, pimelic acid, suberic acid, azelaic acid, dimethyl azelate, sebacic acid, 1,11-undecanedioic acid, 1,10-decanedioic acid, undecanedioic acid, 1,12-dodecanedioic acid, hexadecanedioic acid, eicosanedioic acid, tetracosandioic acid, dimer acids, and their ester derivatives or their anhydride derivatives; preferably, selected from one or more of succinic acid, adipic acid, sebacic acid, 1,12-dodecanedioic acid, and their ester derivatives or their anhydride derivatives; more preferably, selected from one or more of adipic acid, sebacic acid, or their ester derivatives or their anhydride derivatives; and most preferably, selected from adipic acid or their ester derivatives or their anhydride derivatives.

In the present invention, the component a2) is selected from one or a mixture of more of terephthalic acid, isophthalic acid, naphthalenedicarboxylic acid, or their ester derivatives or their anhydride derivatives; preferably, selected from terephthalic acid or their ester derivatives or their anhydride derivatives.

As a specifically selective example, the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, 2,6-dimethyl phthalate, 2,7-naphthalenedicarboxylic acid, 2,7-dimethyl phthalate, 3,4'-oxybis(benzoic acid), dimethyl-3,4'-oxybisbenzoate, 4,4'-oxybis(benzoic acid), dimethyl-4,4'-oxybisbenzoate, 3,4'-thiodibenzoic acid, dimethyl-3,4'-thiodibenzoate, 4,4'-thiodibenzoic acid, dimethyl-4,4'-thiodibenzoate, 3,4'-sulfonyldibenzoic acid, dimethyl-3,4'-sulfonyldibenzoate, 4,4'-sulfonyldibenzoic acid, dimethyl-4,4'-sulfonyldibenzoate, benzophenone-3,4'-dicarboxylic acid, dimethyl benzophenone-3,4'-dicarboxylate, benzophenone-4,4'-dicarboxylic acid, dimethyl benzophenone-4,4'-dicarboxylate, 1,4-naphthalenedicarboxylic acid, dimethyl 1,4-naphthalenedicarboxylate, 4,4'-methylenebis(benzoic acid), 4,4'-methylenebis(dimethyl benzoate), or their ester derivatives or their anhydride derivatives; and preferably, terephthalic acid or its ester derivatives or its anhydride derivatives.

In the present invention, if necessary, the semi-aromatic polyester further includes a third component C, wherein the third component C is selected from one or more of tartaric acid, citric acid, malic acid, trihydroxymethyl propane, trihydroxymethyl ethane, pentaerythritol, polyether triol, glycerol, benzene-1,3,5-tricarboxylic acid, benzene-1,2,4-tricarboxylic acid, 1,2,4-benzenetricarboxylic anhydride, 1,2,4,5-benzenetetracarboxylic acid and benzene-1,2,4,5-tetracarboxylic dianhydride; and preferably, being trihydroxymethyl propane, pentaerythritol, or glycerol.

Based on the total molar amount of the first component A, the amount of the third component C is 0.01 - 5.0 mol%, and preferably, 0.02 - 2.0 mol%.

The semi-aromatic polyester may further include a fourth component D, wherein the fourth component D is a chain extender.

The fourth component D is selected from one or a mixture of more of isocyanates, isocyanurates, peroxides, epoxides, oxazolines, oxazines, lactams, carbodiimides or polycarbodiimides, having two or more of functional groups.

The isocyanates having two or more of functional groups may be aromatic isocyanates or aliphatic isocyanates, and preferably being aromatic diisocyanates or aliphatic diisocyanates. Preferably, the aromatic diisocyanate is tolylene-2,4-diisocyanate, tolylene-2,6-diisocyanate, diphenylmethane 2,2'-diisocyanate, diphenylmethane 2,4'-diisocyanate, diphenylmethane 4,4'-diisocyanate, 1,5-naphthyl diisocyanate or diphenylmethane diisocyanate.

More preferably, the aromatic diisocyanate is diphenylmethane 2,2'-diisocyanate, diphenylmethane 2,4'-diisocyanate, or diphenylmethane 4,4'-diisocyanate.

The isocyanates having two or more of functional groups may also be tris(4-isocyanato-phenyl)methane having three rings.

Preferably, the aliphatic isocyanates are selected from any linear or branched alkylidene isocyanates or cycloalkylidene isocyanates having 2 to 20 carbon atoms, more preferably having 3 to 12 carbon atoms. The aliphatic isocyanate may be hexamethylene 1,6-diisocyanate, isophorone diisocyanate, or methylene bis(4-isocyanato-cyclohexane); and most preferably, hexamethylene 1,6-diisocyanate, or isophorone diisocyanate.

Preferably, the isocyanates having two or more of functional groups are aliphatic isocyanates, which derived from alkylidene isocyanates or cycloalkylidene isocyanates having 2 to 20 carbon atoms, more preferably having 3 to 12 carbon atoms, such as isophorone diisocyanate or methylene bis(4-isocyanato-cyclohexane). The alkylidene isocyanates may be linear or branched compounds. Particularly preferably, isocyanurates of cyclic trimers, pentamers or greater oligomers based on an n-hexamethylene diisocyanate such as hexamethylene 1,6-diisocyanate.

Preferably, the peroxides having two or more of functional groups are benzoyl peroxide, 1,1-bis(*tert*-butyl peroxy)-3,3,5-trimethylcyclohexane, 1,1-bis(*tert*-butyl peroxy)methylcyclododecane, 4,4-bis(butyl peroxy) butyl valerate, dicumyl peroxide, *tert-butyl* peroxybenzoate, dibutyl peroxide, α,α-bis(*tert*-butylperoxy)diisopropylbenzene, 2,5-dimethyl-2,5-bis(*tert*-butylperoxy)hexane, 2,5-dimethyl-2,5-bis(*tert*-butylperoxy)-3-hexyne, or tert-butyl peroxycumene.

Preferably, the epoxides having two or more of functional groups are hydroquinone, diglycidyl ethers, resorcinol diglycidyl ether, 1,6-hexanediol diglycidyl ether, hydrogenated bisphenol A diglycidyl ether, diglycidyl terephthalate, diglycidyl tetrahydrophthalate, diglycidyl hexahydrophthalate, diglycidyl dimethyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol polyglycidyl ether, neopentyl glycol diglycidyl ether, glycol diglycidyl ether, diglycol diglycidyl ether, polyethylene glycol diglycidyl ether, propylene glycol diglycidyl ether, dipropylene glycol diglycidyl ether, polypropylene glycol diglycidyl ether, or poly 1,4-butanediol diglycidyl ether.

The epoxides having two or more of functional groups are preferably copolymers based on styrene, acrylic ester and/or methyl methacrylate and containing epoxy groups, wherein the epoxy groups are preferably glycidyl methacrylate. It has been proved that the advantageous compounds are compounds having a glycidyl methacrylate ratio in the compound of more than 20 wt%, preferably more than 30 wt%, and more preferably more than 50 wt%. The copolymers preferably have an epoxide equivalent of 150 to 3000 g/equivalent, and more preferably 200 to 500 g/equivalent. The copolymers preferably have a weight-average molecular weight (Mw) of 2000 to 25000, and more preferably 3000 to 8000. The copolymers preferably have a number-average molecular weight (Mn) of 400 to 6000, and more preferably 1000 to 4000. A polydispersity index (Q=Mw/Mn) preferably is 1.5 to 5.

The oxazolines or oxazines, having two or more of functional groups, are preferably dioxazolines or dioxazines of which a bridging part is single bond, (CH₂)z-alkylene, wherein z = 2, 3 or 4, such as methylene, ethane-1,2-diyl, propane-1,3-diyl or propane-1,2- diyl, or phenylene. Specifically, the dioxazolines are 2,2'-bis(2-oxazoline), bis(2-oxazolinyl)methane, 1,2- bis(2-oxazolinyl)ethane, 1,3-bis(2-oxazolinyl)propane or 1,4- bis(2-oxazolinyl)butane, 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-*p*-phenylene-bis(4-methyl-2-oxazoline), 2,2'-*p*-phenylene-bis(4,4'-dimethyl-2-oxazoline), 2,2'-*m*-phenylene-bis(4-methyl-2-oxazoline), 2,2'-*m*-phenylene-bis(4,4'-dimethyl-2-oxazoline), 2,2'-hexamethylene-bis(2-oxazoline), 2,2'-octamethylene-bis(2-oxazoline), 2,2'-decamethylene-bis(2-oxazoline), 2,2'-ethylidene-bis(4-methyl-2-oxazoline), 2,2'-tetramethylene-bis(4,4'-dimethyl-2-oxazoline), 2,2'-9,9'-diphenoxyl ethan-bis(2-oxazoline), 2,2'-cyclohexylidene-bis(2-oxazoline) or 2,2'-diphenylene(2-oxazoline).

More preferably, they are 1,4-bis(2-oxazolinyl)benzene, 1,2-bis(2-oxazolinyl)benzene or 1,3-bis(2-oxazolinyl)benzene.

Specifically, the dioxazines are 2,2'-bis(2-dioxazine), bis(2-dioxazine)methane, 1,2-bis(2-dioxazine)ethane, 1,3-bis(2-dioxazine)propane, 1,4-bis(2-dioxazine)butane, 1,4-bis(2-dioxazine)benzene, 1,2-bis(2-dioxazine)benzene or 1,3-bis(2-dioxazine)benzene.

The carbodiimides or polycarbodiimides having two or more functional groups are preferably N,N'-bis(2, 6-diisopropylphenyl)carbodiimide, N,N'-bis(*o*-tolyl)carbodiimide, N,N'-diphenylcarbodiimide, N,N'-dioctyl decylcarbodiimide, N,N'-bis(2, 6-dimethylphenyl) carbodiimide, N-tolyl-N'-cyclohexylcarbodiimide, N,N'-bis(2, 6-di-*tert*-butylphenyl)carbodiimide, N-tolyl-N'-phenylcarbodiimide, N,N'-bis(*p*-nitrophenyl)carbodiimide, N,N'-bis(*p*-aminophenyl)carbodiimide, N,N'-bis(*p*-hydroxylphenyl)carbodiimide, N,N'-dicyclohexylcarbodiimide, N,N'-di-*p*-tolylcarbodiimide, *p*-phenylene-bis(di-*o*-tolyl)carbodiimide, *p*-phenylene-bis(dicyclohexyl)carbodiimide, hexamethylene-bis(cyclohexyl)carbodiimide, 4,4'-dicyclohexylmethan-carbodiimide, ethylidene-bis(diphenyl) carbodiimide, N,N'-benzyl-carbodiimide, N-octadecyl-N'-phenyl carbodiimide, N-benzyl-N'-phenyl carbodiimide, N-octadecyl-N'-tolyl carbodiimide, N-cyclohexyl-N'-tolyl carbodiimide, N-phenyl-N'-tolyl carbodiimide, N-benzyl-N'-tolyl carbodiimide, N,N'-di-*o*-ethylphenyl carbodiimide, N,N'-di-*p*-ethylphenyl carbodiimide, N,N'-di-*o*-isopropylphenyl carbodiimide, N,N'-di-*p*-isopropylphenyl carbodiimide, N,N'-di-*o*-isobutylphenyl carbodiimide, N,N'-di-*p*-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethyl phenyl carbodiimide, N,N'-di-2,4,6-triisopropyl phenyl carbodiimide, N,N'-di-2,4,6-triisobutyl phenyl carbodiimide, diisopropyl carbodiimide, dimethyl carbodiimide, diisobutyl carbodiimide, dioctyl carbodiimide, *tert*-butyl isopropyl carbodiimide, di-β-naphthyl carbodiimide, or di-*tert*-butyl carbodiimide.

Preferably, Based on the total molar amount of the first component A, an amount of the fourth component D is 0.01 - 5 mol%.

Preferably, the semi-aromatic polyester has a viscosity number of 150 - 350 ml/g determined in a phenol/o-dichlorobenzene solution with a weight ratio of 1:1 in 25±0.05°C thermostatic waterbath according to GB/T 17931-1999.

The present invention further provides a preparation method for the semi-aromatic polyester, including the following steps:
S1, adding the component a1) of the first component A and the second component B to a slurry-preparation kettle according to a ratio, transferring a prepared slurry to an esterification reactor 1, recycling a reflux of the second component B through another flow path to the esterification reactor 1 for an esterification reaction at a temperature of 150 - 200°C and a pressure of 30 - 110 kPa for 2 to 4 h to obtain an esterification product Ba1; adding the component a2) of the first component A and the second component B to a slurry-preparation kettle according to a ratio, transferring a prepared slurry to an esterification reactor 2, recycling a reflux of the second component B and a part of a catalyst through another flow path to the esterification reactor 2 for an esterification reaction at a temperature of 200 - 250°C and a pressure of 30 - 110 kPa for 2 to 4 h to obtain an esterification product Ba2;
S2, mixing evenly the esterification product Ba1 and the esterification product Ba2 in step S1 by a mixer, then subjecting them to a primary polycondensation reaction at a reaction temperature of 230 - 270°C and a pressure of 1 - 10 kPa till a reaction product has a viscosity number of 15 - 60 ml/g determined in the phenol/o-dichlorobenzene solution with a weight ratio of 1:1 in 25±0.05°C thermostatic waterbath according to GB/T 17931-1999, to obtain a primary polycondensation product Pre-BA; and
S3, transferring the primary polycondensation product Pre-BA obtained in step S2 and the rest of the catalyst to a final polymerization kettle for a reaction at a temperature of 220 - 270°C and a pressure of 10 - 500 Pa, till a reaction product has a viscosity number of 50 - 180 ml/g determined in the phenol/o-dichlorobenzene solution with a weight ratio of 1:1 in 25±0.05°C thermostatic waterbath according to GB/T 17931-1999, to obtain a final polymerization product Poly-BA.

In case of need, the preparation method further includes a step S4: adding the fourth component D to the semi-aromatic polyester obtained in step S3 for a chain growth reaction at a temperature of 200 - 270°C for a duration of 0.5 - 15 minutes, preferably 2 - 5 minutes, till a reaction product has a viscosity number of 150 - 350 ml/g determined in the phenol/o-dichlorobenzene solution with a weight ratio of 1:1 in 25±0.05°C thermostatic waterbath according to GB/T 17931-1999.

The pressures mentioned in the preparation method in the present invention are absolute pressure (AP).

Preferably, in S1, the catalyst is added in an amount of 0.001 - 1% based on a weight of the final semi-aromatic polyester when preparing the esterification product Ba2. Preferably, the catalyst is added in an amount of 0.02 - 0.2% based on the weight of the final semi-aromatic polyester. In step S1, an addition amount of catalyst is generally 10 - 40 wt% of a total amount of catalyst. By controlling the addition amount of catalyst, the subsequent processing can become more stable. Further, the catalyst can be tin compounds, antimony compounds, cobalt compounds, lead compounds, zinc compounds, aluminum compounds, or titanium compounds, more preferably zinc compounds, aluminum compounds, or titanium compounds, and most preferably titanium compounds. The titanium compounds such as tetra n-butyl titanate or tetraisopropyl titanate have the advantages of less toxicity remained in the product or downstream product compared with other compounds. Such property is significant in the biodegradable polyesters, for they will enter the environment directly in forms of compost bag or mulching film.

In S1, a total molar amount of the second component B is generally 1.1 to 3.0 times that of the first component A, and the excessive amount of second component B can be recycled to the esterification reactor through a purification device (generally, a distillation column) connected to the esterification reactor. The amount of recycled second component B generally accounts for 20 - 50 wt% of the amount of fresh second component B.

With regard to the respective esterification steps on the components a1) and a2), the respective ratios of the molar amount of second component B to the components a1) and a2) also satisfy 1.1 to 3.0 times.

A specific amount of catalyst is added to the polycondensation process of step S3, and cyclic esterification products of this step can be catalyzed and polymerized to linear macromolecular polyesters, so as to decrease the amount of cyclic esterification products and to control the amount of low molecular substances in the semi-aromatic polyester to 0.6 - 1.5 wt%.

In step S3, the addition amount of catalyst is 60 - 90 wt% of the total amount of catalyst.

In step S3, the continuous polycondensation reaction is a temperature of preferably 230 - 260°C. In step S3, the pressure is generally controlled to 0.2 - 5 mbar at the beginning, preferably 0.5 - 3 mbar. The continuous polycondensation reaction preferably lasts for 2 - 7 h, more preferably 3 - 6 h. A carboxyl group content in the polyester after the reaction of S3 is preferably 20 - 60 mmol/kg.

In case of need, step S4 is performed after completion of step S3. The semi-aromatic polyester obtained in step S3 is added, together with the fourth component D (the chain extender) in an amount of 0.01 - 5.0 mol% (based on the total molar amount of the first component A), to a twin-screw, and stays at a temperature of 200 - 270°C for a duration of 0.5 - 15 minutes to obtain a polyester. A viscosity number of the polyester is 150 - 350 ml/g determined in the phenol/o-dichlorobenzene solution with a weight ratio of 1:1 in 25±0.05°C thermostatic waterbath according to GB/T 17931-1999.

An organic solvent (such as acetone, methanol or isopropanol, etc.) can be used in the present invention to wash the aliphatic polyester granules, in order to reduce the amount of low molecular substances in the polyester.

The present invention further provides use of the semi-aromatic polyester in preparing compostable and biodegradable products, wherein the compostable and biodegradable products can be fibers, thin films, containers, etc.

The present invention further provides a semi-aromatic polyester molding composition, including the following components by weight:
5 - 95 wt% of the above-mentioned semi-aromatic polyester;
5 - 95 wt% of additives and/or other polymers; and
0 - 70 wt% of a reinforcing material and/or a filler.

As a specific option, the additives and/or other polymers can be selected from at least one or more of aliphatic polyesters, polycaprolactones, starch, cellulose, polyhydroxyalkanoates, and polylactic acids.

Compared with the prior art, the present invention has the following beneficial effects:
The present invention provides a semi-aromatic polyesters and a preparation method thereof, wherein a total amount of low molecular substances in the semi-aromatic polyester is 0.6 - 1.5 wt%, so that the separation of low molecular substances out of the semi-aromatic polyester as well as its fluidity are improved, and the semi-aromatic polyester prepared has high glossiness and good fluidity.

### DETAILED DESCRIPTION OF PREFERRED EMBODIMENT

Unless otherwise specified, raw materials, reagents, and solvents used in the present invention are commercially available without any processing. The present invention will be further described in detail with reference to the examples, but implementations of the present invention are not limited by the examples described below. Any other changes, modifications, substitutions, combinations, or simplifications made without departing from the spirit and principles of the present invention shall be equivalent substitution methods and shall be included within the scope of protection of the present invention. In addition, regarding the terms "parts" and "%" in the specification, unless otherwise specified, they respectively refer to "part by mass" and "mass%".

The raw materials used in the examples and comparative examples of the present invention are all commercially available.

### Performance test methods:

### Viscosity number of the semi-aromatic polyester:

Viscosity number of the semi-aromatic polyester is determined in a phenol/o-dichlorobenzene solution with a weight ratio of 1:1 in 25±0.05°C thermostatic waterbath according to GB/T 17931-1999, and a sample concentration is 5 mg/ml.

### Total amount of low molecular substances:

About 10 g of semi-aromatic polyester granules of which a mass is denoted as w g are added to 100 mL ethanol for heating reflux for 4 h, and subjected to filtration when they are still hot to obtain a filtrate; the filtrate is then poured to a pre-weighed evaporating dish of which a weight is denoted as a₀ and evaporated in water bath to be approximately dry; and the evaporating dish is then placed to a 105°C drying oven for drying for 2 h, taken out and cooled for 0.5 h, followed by weighing (denoted as a₁). The total amount of low molecular substances = (a₁ - a₀)/w× 100%.

### MFR:

Melt flow rate (MFR) of the semi-aromatic polyester is determined by referring to GB/T 3682.1-2018, Plastics - Determination of the melt mass-flow rate (MFR) and melt volume-flow rate (MVR) of thermoplastics- Part 1: Standard method. Test temperature: 190°C, load: 2.16 kg, and melting time: 5 min.

### Glossiness Test:

After the polyester granules are dried at 80°C for 5 h, they are injection-molded to a square sheet of 100*100*2 mm at 160°C. Then L value of the square sheet is determined by using a desk-type spectrophotometer X-Rite Color Eye 7000A. The greater the L value, the greater the glossiness.

### Example 1:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.135 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor with a temperature of 250°C and a pressure of 2 kPa, for a duration of 2 - 3 hours; an excessive amount of butanediol was pumped out, and then a reaction product Pre-BA reached a viscosity number of 38 ml/g determined in the phenol/o-dichlorobenzene solution with a weight ratio of 1:1 in 25±0.05°C thermostatic waterbath according to GB/T 17931-1999; and

S3, the prepolymer Pre-BA and 0.765 kg/h tetra n-butyl titanate were sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 149 ml/g determined in the phenol/o-dichlorobenzene solution with a weight ratio of 1:1 in 25±0.05°C thermostatic waterbath according to GB/T 17931-1999.

### Example 2:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.27 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor with a temperature of 250°C and a pressure of 2 kPa, for a duration of 2 - 3 hours; an excessive amount of butanediol was pumped out, and then a reaction product Pre-BA reached a viscosity number of 39 ml/g determined in the phenol/o-dichlorobenzene solution with a weight ratio of 1:1 in 25±0.05°C thermostatic waterbath according to GB/T 17931-1999; and

S3, the prepolymer Pre-BA and 0.63 kg/h tetra n-butyl titanate were sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 153 ml/g determined in the phenol/o-dichlorobenzene solution with a weight ratio of 1:1 in 25±0.05°C thermostatic waterbath according to GB/T 17931-1999.

### Example 3:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.27 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor with a temperature of 250°C and a pressure of 2 kPa, for a duration of 2 - 3 hours; an excessive amount of butanediol was pumped out, and then a reaction product Pre-BA reached a viscosity number of 40 ml/g determined in the phenol/o-dichlorobenzene solution with a weight ratio of 1:1 in 25±0.05°C thermostatic waterbath according to GB/T 17931-1999;

S3, the prepolymer Pre-BA and 0.63 kg/h tetra n-butyl titanate were sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 151 ml/g determined in the phenol/o-dichlorobenzene solution with a weight ratio of 1:1 in 25±0.05°C thermostatic waterbath according to GB/T 17931-1999; and

S4, the Poly-BA was continuously fed to a twin-screw extruder with the addition of 5.2 kg/h hexamethylene diisocyanate (HDI) by metering, temperature was set at 250°C; after a duration of 3 minutes, the polyester was pelletized by an underwater pelletizer and dried to obtain a final polyester product.

### Example 4:

Addition amount of the catalyst in step S1 was 0.15 kg/h, and addition amount of the catalyst in step S3 was 0.35 kg/h. The rest was the same as those in Example 2.

### Example 5:

Addition amount of the catalyst in step S1 was 0.09 kg/h, and addition amount of the catalyst in step S3 was 0.21 kg/h. The rest was the same as those in Example 2.

### Example 6:

Addition amount of the catalyst in step S1 was 0.039 kg/h, and addition amount of the catalyst in step S3 was 0.091 kg/h. The rest was the same as those in Example 2.

### Comparative Example 1:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.585 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor; 0.315 kg/h tetra n-butyl titanate was added to the reactor, temperature was 250°C and pressure of the reactor was 2 kPa, and a duration was 2 - 3 hours; an excessive amount of butanediol was pumped out, and then a reaction product Pre-BA reached a viscosity number of 37 ml/g determined in the phenol/o-dichlorobenzene solution with a weight ratio of 1:1 in 25±0.05°C thermostatic waterbath according to GB/T 17931-1999; and

S3, the prepolymer Pre-BA was sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 152 ml/g determined in the phenol/o-dichlorobenzene solution with a weight ratio of 1:1 in 25±0.05°C thermostatic waterbath according to GB/T 17931-1999.

### Example 7:

The resin obtained in Comparative Example 1 was subjected to solvent extraction via an ultrasonic countercurrent extractor (manufactured by Jiangsu Hua-Tai Pharmaceutical Machinery Manufacturing Co., Ltd, ND-400). Key process parameters are as follows:
Feed rate: 500 kg/h;
Solvent (volume ratio: ethanol/water=80/20);
Extraction temperature: 70°C;
Duration: 2.5 h;

Drying and cooling the material after discharge, then a PBAT resin with small amount of low molecular substances was obtained.

### Comparative Example 2:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.72 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor with a temperature of 250°C and a pressure of 2 kPa, for a duration of 2 - 3 hours; an excessive amount of butanediol was pumped out, and then a reaction product Pre-BA reached a viscosity number of 43 ml/g determined in the phenol/o-dichlorobenzene solution with a weight ratio of 1:1 in 25±0.05°C thermostatic waterbath according to GB/T 17931-1999; and

S3, the prepolymer Pre-BA and 0.18 kg/h tetra n-butyl titanate were sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 156 ml/g determined in the phenol/o-dichlorobenzene solution with a weight ratio of 1:1 in 25±0.05°C thermostatic waterbath according to GB/T 17931-1999.

### Comparative Example 3:

S1, 437 kg/h adipic acid and 404 kg/h 1,4-butanediol were continuously added to a slurry-preparation kettle to prepare a slurry, then the slurry was continuously sent to an esterification reactor 1, another flow of 1,4-butanediol from the bottom of the processing tower had a flow rate of 135 kg/h, and 0.60 kg/h glycerol was added simultaneously. In the reactor 1, a pressure was controlled to 40 kPa (absolute pressure), and temperature was 190°C. The duration was 2 to 4 hours. Water, tetrahydrofuran and butanediol produced upon reaction were removed, and an esterification product Ba1 was obtained;

437 kg/h terephthalic acid and 356 kg/h 1,4-butanediol were continuously added to a slurry-preparation kettle to prepare a slurry, then the slurry was continuously sent to an esterification reactor 2, another flow of 1,4-butanediol from the bottom of the processing tower had a flow rate of 119 kg/h, and 0.53 kg/h glycerol and 0.72 kg/h tetra n-butyl titanate were added simultaneously. In the reactor 2, a pressure was controlled to 40 kPa (absolute pressure), and temperature was 240°C. The duration was 2 to 4 hours. Water, tetrahydrofuran and butanediol produced upon reaction were removed, and an esterification product Ba2 was obtained;

S2, after the esterification product Ba1 and the esterification product Ba2 were mixed evenly by a static mixer, they were transferred to a pre-polycondensation reactor with a temperature of 250°C and a pressure of 2 kPa, for a duration of 2 - 3 hours; an excessive amount of butanediol was pumped out, and then a reaction product Pre-BA reached a viscosity number of 40 ml/g determined in the phenol/o-dichlorobenzene solution with a weight ratio of 1:1 in 25±0.05°C thermostatic waterbath according to GB/T 17931-1999;

S3, the prepolymer Pre-BA and 0.18 kg/h tetra n-butyl titanate were sent by a melt pump to a disc reactor (i.e. a final polymerization kettle) with a temperature of 250°C and a pressure of 20 Pa, for a reaction duration of 3 - 4 hours; then a reaction product Poly-BA reached a viscosity number of 151 ml/g determined in the phenol/o-dichlorobenzene solution with a weight ratio of 1:1 in 25±0.05°C thermostatic waterbath according to GB/T 17931-1999; and

S4, the Poly-BA was continuously fed to a twin-screw extruder with the addition of 5.2 kg/h hexamethylene diisocyanate (HDI) by metering, temperature was set at 250°C; after a duration of 3 minutes, the polyester was pelletized by an underwater pelletizer and dried to obtain a final polyester product.

### Comparative Example 4:

The resin obtained in Comparative Example 3 was subjected to solvent extraction via an ultrasonic countercurrent extractor (manufactured by Jiangsu Hua-Tai Pharmaceutical Machinery Manufacturing Co., Ltd, ND-400). Key process parameters are as follows:
Feed rate: 500 kg/h;
Solvent (volume ratio: ethanol/water=80/20);
Extraction temperature: 70°C;
Duration: 5 h;
Drying and cooling the material after discharge, then a PBAT resin with small amount of low molecular substances was obtained.

**Table 1 Performance results**

| | | | Example 1 | Example 2 | Example 3 | Comparative Example 1 |
|---|---|---|---|---|---|---|
| Addition amount of catalyst (based on a weight of the final semi-aromatic polyester) /wt% | | | 0.076 | 0.076 | 0.076 | 0.076 |
| Addition proportion of catalyst in each step/% | | S1 | 15 | 30 | 30 | 65 |
| | | S2 | | | | 35 |
| | | S3 | 85 | 70 | 70 | |
| HDI | | | No | No | Yes | No |
| Properties of product | Viscosity number/ml/g | | 149 | 153 | 192 | 152 |
| | Total amount of low molecular substances /wt% | | 0.65 | 0.78 | 0.75 | 1.87 |
| | MFR/g/10min | | 9.4 | 9.9 | 7.8 | 14.3 |
| | Glossiness L | | 84.3 | 83.5 | 83.3 | 74.1 |

**Continued Table 1:**

| | | Exam ple 4 | Exam ple 5 | Exam ple 6 | Exam ple 7 | Comp arative Exam ple 2 | Comp arative Exam ple 3 | Comp arative Exam ple 4 |
|---|---|---|---|---|---|---|---|---|
| Addition amount of catalyst (based on a weight of the final semi-aromatic polyester) /wt% | | 0.042 | 0.025 | 0.011 | | 0.076 | 0.076 | |
| Addition proportion of catalyst in each step/% | S1 | 30 | 30 | 30 | | 80 | 80 | |
| | S2 | | | | | | | |
| | S3 | 70 | 70 | 70 | | 20 | 20 | |
| HDI | | No | No | No | | No | Yes | |
| Properties of product | Viscosity number/ml/g | 147 | 145 | 140 | 145 | 156 | 190 | 186 |
| | Total amount of low molecular substances /wt% | 0.92 | 1.05 | 1.23 | 0.66 | 1.85 | 1.91 | 0.35 |
| | MFR/g/10min | 11.3 | 13.8 | 15.9 | 9.5 | 13.8 | 11.3 | 5.1 |
| | Glossiness L | 82.5 | 81.4 | 80.1 | 82.2 | 74.5 | 73.2 | 84.5 |

It can be seen from the results of Table 1 that by controlling the total amount of low molecular substances in the polyester products of Examples 1 to 7 in the present invention, glossiness of the prepared polyester products can reach 80 or more. The polyester products have high glossiness and good fluidity which are under balanced condition.

Compared with Example 2, in the case of similar viscosity numbers of polyesters, the total amounts of low molecular substances in Comparative Examples 1 and 2 are too high. Although the fluidity is good, glossiness thereof is apparently poor than that in Example 2, and balance between fluidity and glossiness cannot be achieved.

Meanwhile, it can be seen from the comparison of Comparative Example 3 and Example 3 that by using the chain extension process, viscosity numbers of the products in Comparative Example 3 and Example 3 are apparently increased. In the case of similar viscosity numbers of polyesters, the total amount of low molecular substances in Comparative Example 3 is too high. Although the fluidity is good, glossiness thereof is apparently poor than that in Example 3, and balance between fluidity and glossiness cannot be achieved.

It can be seen from the comparison of Comparative Example 4 and Example 3 that in the case of similar viscosity numbers of polyesters, the total amount of low molecular substances in Comparative Example 4 is too low. Although the glossiness is high, fluidity thereof is apparently poor than that in Example 3, and balance between fluidity and glossiness cannot be achieved.

## Claims

1. A semi-aromatic polyester, comprising repeating units derived from the following components:
a first component A, based on a total molar amount of the first component A,
comprising:
a1) from 40 to 60 mol% of at least one aliphatic dicarboxylic acid or derivatives thereof;
a2) from 40 to 60 mol% of at least one aromatic dicarboxylic acid or derivatives thereof;
a second component B, being 1,4-butanediol;
**characterized in that**, based on a total weight of the semi-aromatic polyester, a total amount of low molecular substances in the semi-aromatic polyester is from 0.6 to 1.5 wt%, preferably from 0.7 to 1.2 wt%,
wherein the total amount of low molecular substances is determined according to the following method:
adding 10 g semi-aromatic polyester granules of which a mass is denoted as w g, to 100 mL ethanol for heating reflux for 4 h; subjecting the semi-aromatic polyester granules and the ethanol to filtration when they are still hot to obtain a filtrate, then pouring the filtrate to a pre-weighed evaporating dish of which a weight is denoted as a₀, evaporating the filtrate in water bath to be approximately dry, placing the evaporating dish to a 105°C drying oven for drying for 2 h, then taking out the evaporating dish and cooling for 0.5 h, weighing the evaporating dish and denoting as a₁, and then the total amount of low molecular substances = (a₁ - a₀)/w× 100%.

2. The semi-aromatic polyester according to claim 1, wherein the component a1) is selected from one or a mixture of more of oxalic acid, malonic acid, succinic acid, glutaric acid, adipic acid, pimelic acid, suberic acid, azelaic acid, sebacic acid, 1,11-undecanedioic acid, 1,10-decanedioic acid, undecanedioic acid, 1,12-dodecanedioic acid, hexadecanedioic acid, eicosanedioic acid, or tetracosandioic acid, or their ester derivatives or their anhydride derivatives; preferably, selected from one or two of adipic acid, sebacic acid, or their ester derivatives or their anhydride derivatives.

3. The semi-aromatic polyester according to claim 1, wherein the component a2) is selected from one or a mixture of more of terephthalic acid, isophthalic acid, naphthalenedicarboxylic acid, or their ester derivatives or their anhydride derivatives; preferably, selected from terephthalic acid or their ester derivatives or their anhydride derivatives.

4. The semi-aromatic polyester according to claim 1, wherein based on the total molar amount of the first component A, the semi-aromatic polyester further comprises 0.01 - 5.0 mol% of a third component C, preferably 0.02 - 2.0 mol%.

5. The semi-aromatic polyester according to claim 4, wherein the third component C is selected from one or more of tartaric acid, citric acid, malic acid, trihydroxymethyl propane, trihydroxymethyl ethane, pentaerythritol, polyether triol, glycerol, benzene-1,3,5-tricarboxylic acid, benzene-1,2,4-tricarboxylic acid, 1,2,4-benzenetricarboxylic anhydride, 1,2,4,5-benzenetetracarboxylic acid and benzene-1,2,4,5-tetracarboxylic dianhydride; preferably, being trihydroxymethyl propane, pentaerythritol, or glycerol.

6. The semi-aromatic polyester according to claim 1, wherein based on the total molar amount of the first component A, the semi-aromatic polyester further comprises 0.01 - 5.0 mol% of a fourth component D.

7. The semi-aromatic polyester according to claim 6, wherein the fourth component D is selected from one or a mixture of more of isocyanates, isocyanurates, peroxides, epoxides, oxazolines, oxazines, lactams, carbodiimides or polycarbodiimides, having two or more of functional groups.

8. The semi-aromatic polyester according to claim 1, wherein the semi-aromatic polyester has a viscosity number of 150 - 350 ml/g determined in a phenol/o-dichlorobenzene solution with a weight ratio of 1:1 in 25±0.05°C thermostatic waterbath according to GB/T 17931-1999; the semi-aromatic polyester has a carboxyl group content of 5 - 50 mmol/kg, preferably 10 - 30 mmol/kg.

9. A preparation method for the semi-aromatic polyester according to any of claims 1 to 8, **characterized in that**, the method comprises the following steps:
S1, adding the component a1) of the first component A and the second component B to a slurry-preparation kettle according to a ratio, transferring a prepared slurry to an esterification reactor 1, recycling a reflux of the second component B through another flow path to the esterification reactor 1 for an esterification reaction at a temperature of 150 - 200°C and a pressure of 30 - 110 kPa for 2 to 4 h to obtain an esterification product Ba1; adding the component a2) of the first component A and the second component B to a slurry-preparation kettle according to a ratio, transferring a prepared slurry to an esterification reactor 2, recycling a reflux of the second component B and a part of a catalyst through another flow path to the esterification reactor 2 for an esterification reaction at a temperature of 200 - 250°C and a pressure of 30 - 110 kPa for 2 to 4 h to obtain an esterification product Ba2;
S2, mixing evenly the esterification product Ba1 and the esterification product Ba2 in step S1 by a mixer, then subjecting them to a primary polycondensation reaction at a reaction temperature of 230 - 270°C and a pressure of 1 - 10 kPa till a reaction product has a viscosity number of 15 - 60 ml/g determined in the phenol/o-dichlorobenzene solution with a weight ratio of 1:1 in 25±0.05°C thermostatic waterbath according to GB/T 17931-1999, to obtain a primary polycondensation product Pre-BA; and
S3, transferring the primary polycondensation product Pre-BA obtained in step S2 and the rest of the catalyst to a final polymerization kettle for a reaction at a temperature of 220 - 270°C and a pressure of 10 - 500 Pa, till a reaction product has a viscosity number of 50 - 180 ml/g determined in the phenol/o-dichlorobenzene solution with a weight ratio of 1:1 in 25±0.05°C thermostatic waterbath according to GB/T 17931-1999, to obtain a final polymerization product Poly-BA.

10. The preparation method for semi-aromatic polyester according to claim 9, wherein in S1, the catalyst is added in an amount of 10 - 40 wt% of a total amount of catalyst; in S3, the catalyst is added in an amount of 60 - 90 wt% of the total amount of catalyst .

11. The preparation method for semi-aromatic polyester according to claim 9, wherein the method further comprises S4: adding the fourth component D to the semi-aromatic polyester obtained in step S3 for a chain growth reaction at a temperature of 200 - 270°C for a duration of 0.5 - 15 minutes, preferably 2 - 5 minutes, till a reaction product has a viscosity number of 150 - 350 ml/g determined in the phenol/o-dichlorobenzene solution with a weight ratio of 1:1 in 25±0.05°C thermostatic waterbath according to GB/T 17931-1999.

12. A semi-aromatic polyester molding composition, **characterized in that**, it comprises the following components in weight percentage:
5 - 95 wt% of the semi-aromatic polyester according to any of claims 1 to 8;
5 - 95 wt% of additives and/or other polymers; and
0 - 70 wt% of a reinforcing material and/or a filler.

13. Use of the semi-aromatic polyester according to any of claims 1 to 8 in preparing compostable and biodegradable products, **characterized in that**, the compostable and biodegradable products are fibers, thin films or containers.
